# EUROPÄISCHE PATENTSCHRIFT

(11) **EP 1 282 542 B1**
(45) Veröffentlichungstag und Bekanntmachung des Hinweises auf die Patenterteilung: **12.04.2006**
(21) Anmeldenummer: 01919182.4
(22) Anmeldetag: 10.03.2001
(51) Int. Cl.: B60S 1/34

(54) **SCHEIBENWISCHERANTRIEB**
WINDSCREEN WIPER DRIVE
ENTRAINEMENT D'ESSUIE-GLACE

(30) Priorität: 17.03.2000 DE 10013202
(43) Veröffentlichungstag der Anmeldung: 12.02.2003
(73) Patentinhaber: ROBERT BOSCH GMBH, 70442 Stuttgart (DE)
(72) Erfinder: KUEHBAUCH, Gerd, 77830 Buehlertal (DE)
(86) Internationale Anmeldenummer: PCT/DE2001/000917
(87) Internationale Veröffentlichungsnummer: WO 2001/068422

(56) Entgegenhaltungen:
- EP-A2- 0 182 123
- WO-A1-01/68423
- WO-A1-96/11824
- DE-C1- 19 634 718
- FR-A1- 2 725 414

## Beschreibung

### Stand der Technik

Die Erfindung betrifft einen Scheibenwischerantrieb mit einer schwenkbar gelagerten Antriebswelle, einer fest mit dieser verbundenen Antriebsschwinge, einem Koppelhebel, der mit der Antriebsschwinge durch ein erstes Gelenk verbunden ist, einer Stützschwinge, die mit dem Koppelhebel durch ein zweites Gelenk verbunden und durch ein Blindgelenk gelagert ist, und einem Scheibenwischerarm, der mit dem Koppelhebel verbunden ist.

Ein solcher Scheibenwischerantrieb ist aus der EP-A-0 182 123 bekannt. Er dient dazu, ein am Scheibenwischerarm befestigtes Scheibenwischerblatt mit einer hin- und hergehenden Bewegung über eine zu reinigende Windschutzscheibe zu bewegen. Um zu verhindern, daß in dem aus Antriebsschwinge, Koppelhebel und Stützschwinge bestehenden Mechanismus, der auf einem Viergelenk-Mechanismus basiert, Verspannungen auftreten können, ist ein fünftes Gelenk vorgesehen, das den Koppelhebel in zwei relativ zueinander bewegbare Abschnitte unterteilt. Der Nachteil hierbei besteht in der relativ aufwendigen Konstruktion. Außerdem ist die Verwendung eines fünften Gelenks am Koppelhebel in optischer Hinsicht nachteilig.

Die Aufgabe der Erfindung besteht darin, einen Scheibenwischerantrieb der eingangs genannten Art dahingehend weiterzubilden, daß sich ein einfacherer Aufbau und ein ansprechenderes optisches Erscheinungsbild ergeben.

### Vorteile der Erfindung

Der Scheibenwischerantrieb mit den Merkmalen des Patentanspruchs 1 hat den Vorteil, daß entweder vollständig auf das fünfte Gelenk verzichtet werden kann, was zu einem einfacheren Aufbau führt, oder daß das fünfte Gelenk wenigstens nicht am Koppelhebel angeordnet werden muß, sondern entweder an der Antriebsschwinge oder der Stützschwinge. Somit liegt es in einem Bereich, der bei der Betrachtung des Scheibenwischerantriebs nicht so sehr ins Auge springt.

Gemäß einer bevorzugten Ausführungsform der Erfindung ist vorgesehen, daß die Antriebsschwinge mit einem Schwenkgelenk versehen ist, dessen Drehachse etwa senkrecht zur Drehachse der Antriebsschwinge ist, daß das Gelenk zwischen der Antriebsschwinge und dem Koppelhebel ein Kugelgelenk ist und daß das Gelenk zwischen dem Koppelhebel und der Stützschwinge ein Schwenkgelenk ist. Alternativ kann vorgesehen sein, daß die Stützschwinge mit einem Schwenkgelenk versehen ist, dessen Drehachse etwa senkrecht zur Drehachse der Stützschwinge ist, daß das Gelenk zwischen der Stützschwinge und dem Koppelhebel ein Kugelgelenk ist und daß das Gelenk zwischen dem Koppelhebel und der Antriebsschwinge ein Schwenkgelenk ist. Bei diesen Ausgestaltungen ist mit geringem Aufwand ein Fünfgelenk-Mechanismus gebildet, wobei das fünfte Gelenk aufgrund seiner Anordnung an einem wenig exponierten Bauteil, nämlich einer der Schwingen und nicht am Koppelhebel wie im Stand der Technik, zu konstruktiven und stilistischen Vorteilen führt, beispielsweise zu einer flacheren Bauweise. Weiterhin ist zuverlässig verhindert, daß Toleranzen in axialer Richtung zur Schwergängigkeit und zu einem erhöhten Verschleiß des Scheibenwischerantriebs führen. Auch ist es nunmehr möglich, eine Ausrichtung der Schwenkachsen der Antriebsschwinge und der Stützschwinge zu wählen, die nicht parallel zu einander sind.

Gemäß einer anderen bevorzugten Ausführungsform ist vorgesehen, daß das Blindgelenk ein Kugelgelenk ist, daß das Gelenk zwischen der Stützschwinge und dem Koppelhebel ein Kugelgelenk ist und daß das Gelenk zwischen dem Koppelhebel und der Antriebsschwinge ein Schwenkgelenk ist. Bei dieser Ausführungsform erhält der Viergelenk-Mechanismus einen zusätzlichen Freiheitsgrad durch die Verwendung der beiden Kugelgelenke, so daß ein Toleranzausgleich sowie ein Versatz zwischen der Drehachse der Antriebsschwinge und der Drehachse der Stützschwinge problemlos möglich ist. Ferner ergibt sich ein besonders einfacher Aufbau, und es ist kein aufwendiges Blindgelenk erforderlich. Durch den einfachen Aufbau und die leichte Montierbarkeit ergeben sich Kostenvorteile. Durch den Verzicht auf ein fünftes Gelenk ist ein besonders flacher Aufbau möglich, so daß ein ansprechendes Erscheinungsbild möglich ist.

Vorteilhafte Ausgestaltungen der Erfindung ergeben sich aus den Unteransprüchen.

### Zeichnungen

Die Erfindung wird nachfolgend unter Bezugnahme auf verschiedene Ausführungsformen beschrieben, die in den beigefügten Zeichnungen dargestellt sind. In diesen zeigen:
- Figur 1 in einer schematischen Ansicht einen Scheibenwischerantrieb gemäß einer ersten Ausführungsform der Erfindung;
- Figur 2 in einer perspektivischen Ansicht die Antriebsschwinge, die Stützschwinge und den Koppelhebel des Scheibenwischerantriebs von Figur 1;
- Figur 3 in einer schematischen Ansicht einen Scheibenwischerantrieb gemäß einer zweiten Ausführungsform der Erfindung;
- Figur 4 in einer perspektivischen Ansicht die Antriebsschwinge, die Stützschwinge und den Koppelhebel des Scheibenwischerantriebs von Figur 3;
- Figur 5 in einer schematischen Ansicht einen Scheibenwischerantrieb gemäß einer dritten Ausführungsform der Erfindung; und
- Figur 6 in einer perspektivischen Ansicht die Antriebsschwinge, die Stützschwinge und den Koppelhebel des Scheibenwischerantriebs von Figur 5.

### Beschreibung der Ausführungsbeispiele

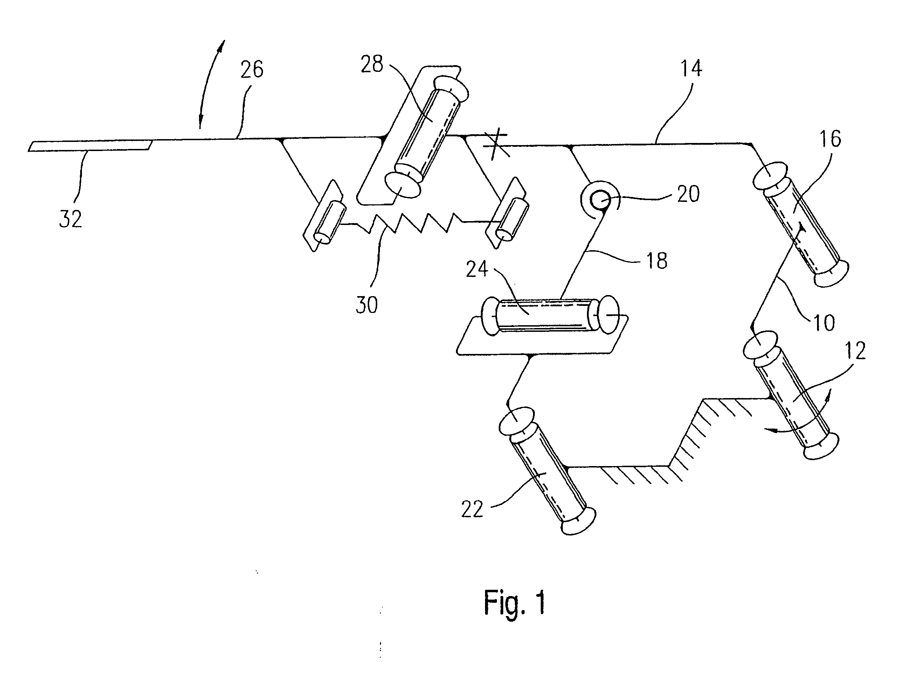

In Figur 1 ist schematisch ein Scheibenwischerantrieb gemäß einer ersten Ausführungsform gezeigt. Er enthält eine Antriebsschwinge 10, die in einem Antriebsschwingen-Schwenkgelenk 12 fahrzeugfest gelagert ist. Die Antriebsschwinge 10 kann von einem (nicht dargestellten) Scheibenwischermotor in eine hin- und hergehende Bewegung versetzt werden.

Mit der Antriebsschwinge 10 ist ein Koppelhebel 14 durch ein Antriebsgelenk 16 verbunden. Das Antriebsgelenk 16 ist hier als Schwenkgelenk ausgebildet. Mit dem Koppelhebel 14 ist eine Stützschwinge 18 durch ein Stützgelenk 20 verbunden, das hier als Kugelgelenk ausgebildet ist. Die Stützschwinge 18 ist durch ein Blindgelenk 22, das hier als Schwenkgelenk ausgebildet ist, fahrzeugfest gelagert. Zwischen dem Stützgelenk 20 und dem Blindgel enk 22 ist die Stützschwinge 18 mit einem Stützschwingen-Schwenkgelenk 24 versehen, dessen Schwenkachse etwa senkrecht zu der vom Blindgelenk 22 definierten Schwenkachse ist. Das Stützschwingen-Schwenkgelenk 24 ermöglicht es, das Stützgelenk 20 in einer Ebene zu verschwenken, die definiert ist durch die Schwenkachse des Blindgelenks 22 und das Stützgelenk 20.

Mit dem Koppelhebel 14 ist in an sich bekannter Weise ein Scheibenwischerarm 26 verbunden, wobei ein Scheibenwischerarm-Schwenkgelenk 28 und eine Zugfeder 30 vorgesehen sind, so daß ein am Scheibenwischerarm 26 angebrachtes Scheibenwischerblatt 32 gegen eine zu reinigende Scheibe beaufschlagt wird.

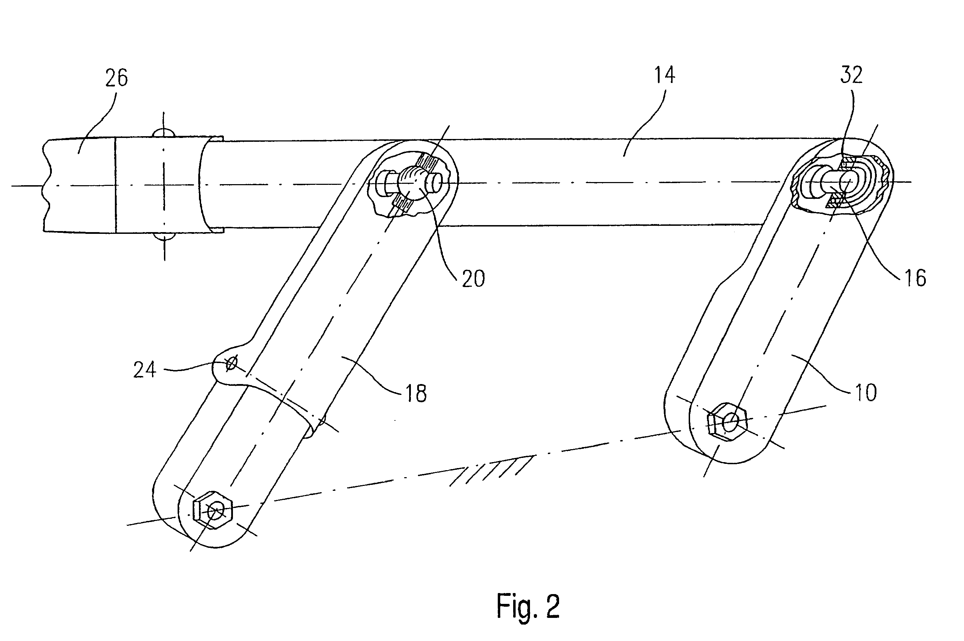

Wie in Figur 2 zu sehen ist, ist das Antriebsgelenk 16 als Zapfengelenk ausgeführt, das mit einem Kugellager 32 versehen ist, um geringere Reibungsverluste zu erhalten.

Das Stützschwingen-Schwenkgelenk 24 liegt, wie in Figur 2 gut zu sehen ist, in einem Bereich in der Nähe des Blindgelanks 22, so daß es von einer an den Scheibenwischerantrieb angrenzenden Motorhaube verdeckt werden kann. Auch ist zu sehen, daß das Stützschwingen-Schwenkgelenk sehr flach baut.

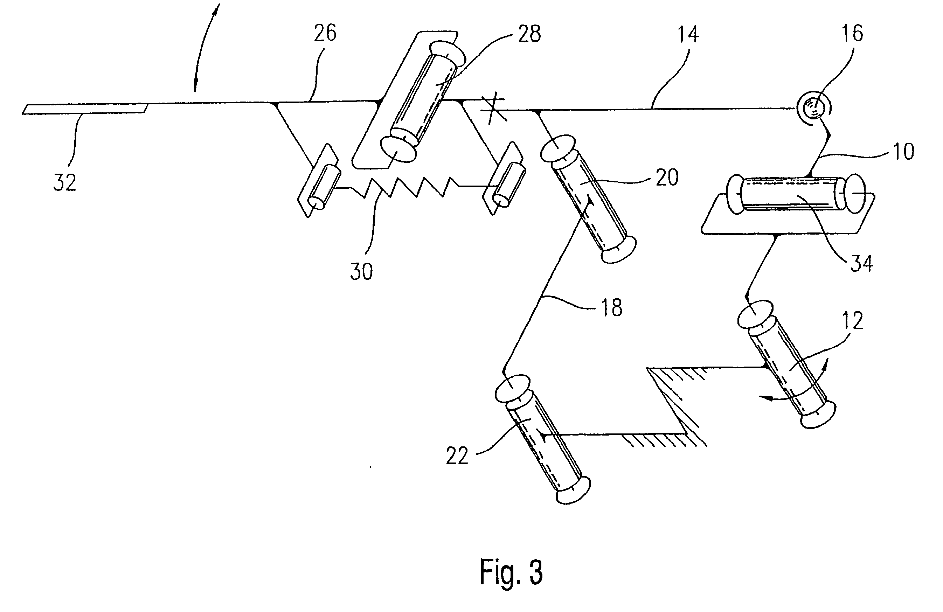

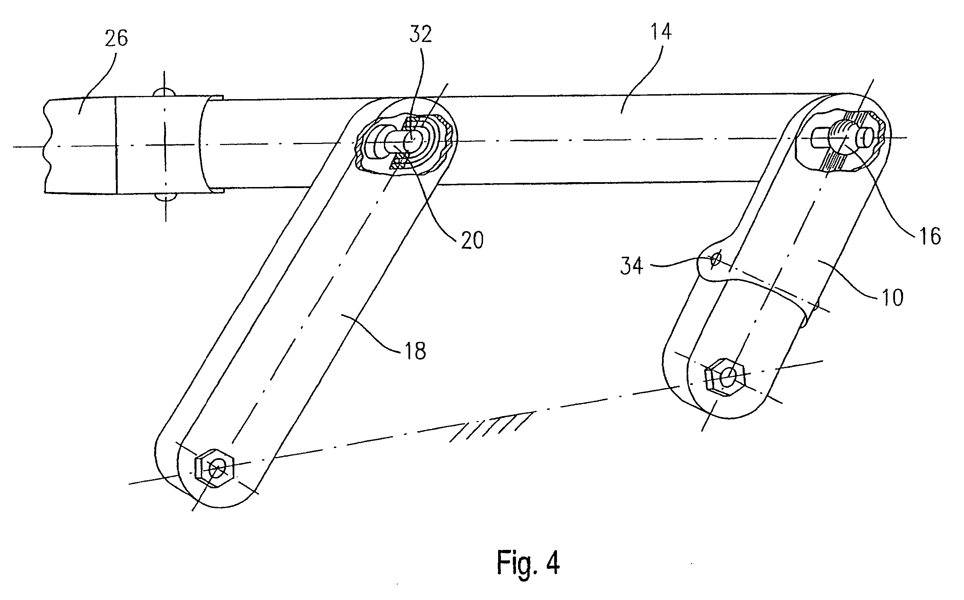

In den Figuren 3 und 4 ist ein Scheibenwischerantrieb gemäß einer zweiten Ausführungsform gezeigt. Für die aus der ersten Ausführungsform bekannten Bauteile werden dieselben Bezugszeichen verwendet, und es wird auf die obigen Erläuterungen verwiesen.

Auch bei der zweiten Ausführungsform handelt es sich um einen Fünfgelenk-Mechanismus. Gegenüber der ersten Ausführungsform ist allerdings die Anordnung der Gelenke für die Antriebsschwinge und die Stützschwinge vertauscht: es ist also das Stützgelenk 20 als Schwenkgelenk ausgeführt, während das Antriebsgelenk 16 nunmehr ein Kugelgelenk ist. Auch ist nunmehr die Antriebsschwinge mit einem Schwenkgelenk versehen, nämlich dem Antriebsschwingen-Schwenkgelenk 34.

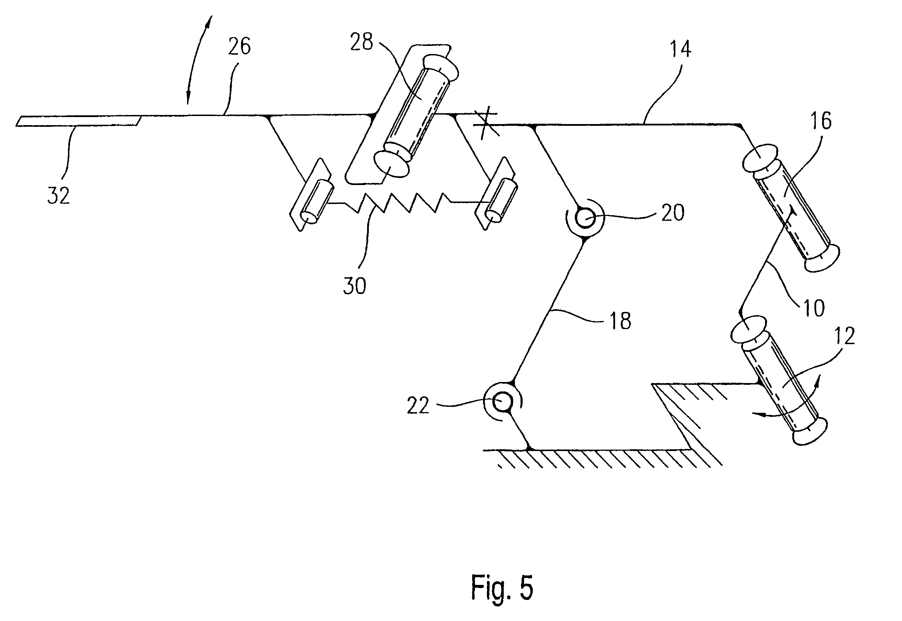

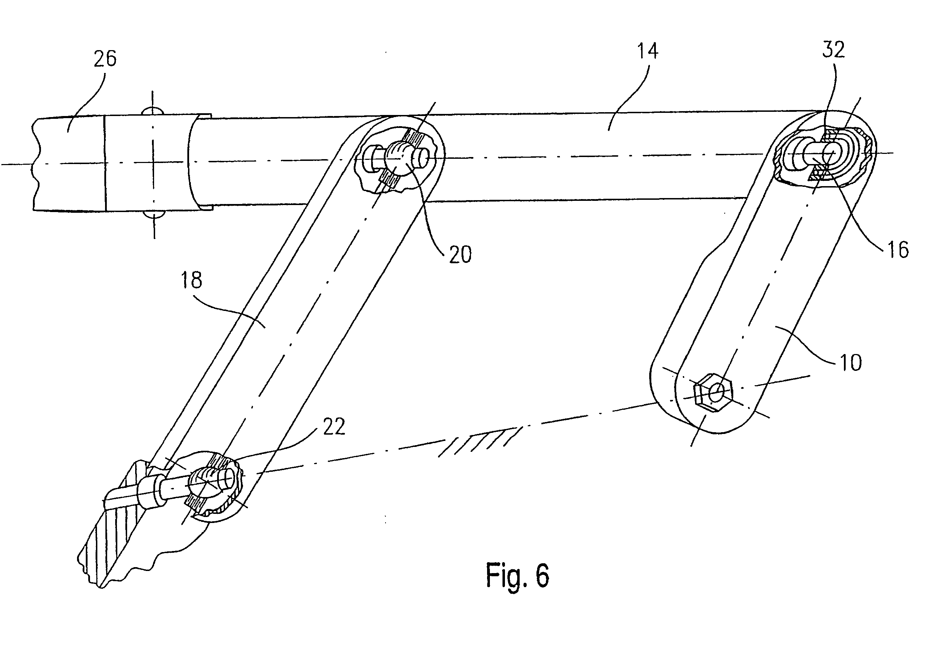

In den Figuren 5 und 6 ist ein Scheibenwischerantrieb gemäß einer dritten Ausführungsform gezeigt. Auch hier werden für die Bauelemente, die von den vorangegangenen Ausführungsformen bekannt sind, dieselben Bezugszeichen verwendet, und es wird auf die obigen Erläuterungen verwiesen.

Im Unterschied zu den ersten beiden Ausführungsformen handelt es sich bei der dritten Ausführungsformen um einen Viergelenk-Mechanismus; es sind also sowohl die Antriebsschwinge 10 als auch die Stützschwinge 18 ohne ein Schwenkgelenk ausgeführt. Um jedoch Verspannungen des Scheibenwischerantriebs zu verhindern, sind sowohl das Blindgelenk 22 als auch Stützgelenk 20 als Kugelgelenk ausgeführt. Auf diese Weise ergibt sich mit minimalem Bauaufwand sowohl eine leichte Montierbarkeit als auch die Möglichkeit, die Schwenkachsen der Schwenkgelenke 12, 22 relativ zu einander versetzt anzuordnen.

### Bezugszeichenliste

- 10:: Antriebsschwinge
- 12:: Antriebsschwingen-Schwenkgelenk
- 14:: Koppelhebel
- 16:: Antriebsgelenk
- 18:: Stützschwinge
- 20:: Stützgelenk
- 22:: Blindgelenk
- 24:: Stützschwingen-Schwenkgelenk
- 26:: Scheibenwischerarm
- 28:: Scheibenwischerarm-Schwenkgelenk
- 30:: Zugfeder
- 32:: Kugellager
- 34:: Antriebsschwingen-Schwenkgelenk

## Patentansprüche

1. Scheibenwischerantrieb mit einer schwenkbar gelagerten Antriebswelle, einer fest mit dieser verbundenen Antriebsschwinge (10), einem Koppelhebel (14), der mit der Antriebsschwinge durch ein erstes Gelenk (16) verbunden ist, einer Stützschwinge (18), die mit dem Koppelhebel (14) durch ein zweites Gelenk (20) verbunden und durch ein Blindgelenk (22) gelagert ist, und einem Scheibenwischerarm (26), der mit dem Koppelhebel verbunden ist, **dadurch gekennzeichnet, daß** eines der beiden Gelenke (16, 20) des Koppelhebels in einer Ebene, die von der Drehachse der zugehörigen Schwinge (10, 18) und dem entsprechenden Gelenk (16, 20) definiert ist, schwenkbar ist, während das andere Gelenk (20, 16) in einer Ebene, die von der Drehachse der zugehörigen Schwinge (18, 10) und diesem anderen Gelenk (20, 16) definiert ist, fixiert ist.

2. Scheibenwischerantrieb nach Anspruch 1, **dadurch gekennzeichnet, daß** die Antriebsschwinge (10) mit einem Schwenkgelenk (34) versehen ist, dessen Drehachse etwa senkrecht zur Drehachse der Antriebsschwinge (10) ist, daß das Gelenk zwischen der Antriebsschwinge und dem Koppelhebel ein Kugelgelenk (16) ist und daß das Gelenk zwischen dem Koppelhebel und der Stützschwinge ein Schwenkgelenk (20) ist.

3. Scheibenwischerantrieb nach Anspruch 1, **dadurch gekennzeichnet, daß** die Stützschwinge (18) mit einem Schwenkgelenk (24) versehen ist, dessen Drehachse etwa senkrecht zur Drehachse der Stützschwinge (18) ist, daß das Gelenk zwischen der Stützschwinge und dem Koppelhebel ein Kugelgelenk (20) ist und daß das Gelenk zwischen dem Koppelhebel und der Antriebsschwinge ein Schwenkgelenk (16) ist.

4. Scheibenwischerantrieb nach Anspruch 1, **dadurch gekennzeichnet, daß** das Blindgelenk ein Kugelgelenk (22) ist, daß das Gelenk zwischen der Stützschwinge und dem Koppelhebel ein Kugelgelenk (20) ist und daß das Gelenk zwischen dem Koppelhebel und der Antriebsschwinge ein Schwenkgelenk (16) ist.

5. Scheibenwischerantrieb nach einem der vorhergehenden Ansprüche, **dadurch gekennzeichnet, daß** das Schwenkgelenk (12; 16; 20; 22; 24; 34) als Zapfenlager ausgebildet ist.

6. Scheibenwischerantrieb nach Anspruch 5, **dadurch gekennzeichnet, daß** das Zapfenlager mit einem Kugellager (34) versehen ist.

## Claims

1. Windscreen wiper drive with a pivotably mounted drive shaft, a driving rocker (10) connected fixedly thereto, a coupling lever (14), which is connected to the driving rocker by a first joint (16), a supporting rocker (18), which is connected to the coupling lever (14) by a second joint (20) and is mounted by means of a blind joint (22), and a windscreen wiper arm (26) which is connected to the coupling lever, **characterized in that** one of the two joints (16, 20) of the coupling lever can be pivoted in a plane which is defined by the axis of rotation of the associated rocker (10, 18) and the corresponding joint (16, 20) while the other joint (20, 16) is fixed in a plane which is defined by the axis of rotation of the associated rocker (18, 10) and this other joint (20, 16).

2. Windscreen wiper drive according to Claim 1, **characterized in that** the driving rocker (10) is provided with a pivoting joint (34), the axis of rotation of which is approximately perpendicular to the axis of rotation of the driving rocker (10), **in that** the joint between the driving rocker and the coupling lever is a ball-and-socket joint (16), and **in that** the joint between the coupling lever and the supporting rocker is a pivoting joint (20).

3. Windscreen wiper drive according to Claim 1, **characterized in that** the supporting rocker (18) is provided with a pivoting joint (24), the axis of rotation of which is approximately perpendicular to the axis of rotation of the supporting rocker (18), **in that** the joint between the supporting rocker and the coupling lever is a ball-and-socket joint (20), and **in that** the joint between the coupling lever and the driving rocker is a pivoting joint (16).

4. Windscreen wiper drive according to Claim 1, **characterized in that** the blind joint is a ball-and-socket joint (22), **in that** the joint between the supporting rocker and the coupling lever is a ball-and-socket joint (20) and **in that** the joint between the coupling lever and the driving rocker is a pivoting joint (16).

5. Windscreen wiper drive according to one of the preceding claims, **characterized in that** the pivoting joint (12; 16; 20; 22; 24; 34) is designed as a journal bearing.

6. Windscreen wiper drive according to Claim 5, **characterized in that** the journal bearing is provided with a ball bearing (34).

## Revendications

1. Dispositif d'entraînement d'essuie-glace comportant un axe d'entraînement monté pivotant, un bras d'entraînement (10) reliée solidairement à l'axe, un levier de couplage (14) relié par une première articulation (16) du bras d'entraînement, un bras d'appui (18) relié par une seconde articulation (20) au levier de couplage (14) et porté par une articulation non motrice (22) ainsi qu'un bras d'essuie-glace (26) relié au levier de couplage,
**caractérisé en ce que**
l'une des deux articulations (16, 20) du levier de couplage est pivotante dans un plan passant par l'axe de rotation du bras correspondant (10, 18) et de l'articulation (16, 20) alors que l'autre articulation (20, 16) est bloquée dans un plan défini par l'axe de rotation du bras correspondante (18, 10) et l'autre articulation (20, 16).

2. Dispositif d'entraînement d'essuie-glace selon la revendication 1,
**caractérisé en ce que**
le bras d'entraînement (10) est muni d'une articulation pivotante (34) dont l'axe de rotation est sensiblement perpendiculaire à l'axe de rotation du bras d'entraînement (10),
l'articulation entre le bras d'entraînement et le levier de couplage est une articulation à bille (16), et
l'articulation entre le levier de couplage et le bras d'appui est une articulation pivotante (20).

3. Dispositif d'entraînement d'essuie-glace selon la revendication 1,
**caractérisé en ce que**
du bras d'appui (18) est munie d'une articulation pivotante (24) dont l'axe de rotation est sensiblement perpendiculaire à l'axe de rotation du le bras d'appui (18),
l'articulation entre le bras d'appui et le levier de couplage est une articulation à bille (20) et l'articulation entre le levier de couplage et le bras d'entraînement est une articulation pivotante (16).

4. Dispositif d'entraînement d'essuie-glace selon la revendication 1,
**caractérisé en ce que**
l'articulation non motorisée est une articulation à bille (22),
l'articulation entre le bras d'appui et le levier de couplage est une articulation à bille (20) et
l'articulation entre le levier de couplage et le bras d'entraînement est une articulation pivotante (16).

5. Dispositif d'entraînement d'essuie-glace selon l'une des revendications précédentes,
**caractérisé en ce que**
l'articulation pivotante (12 ; 16 ; 20 ; 22 ; 24 34) est un palier à tourillon.

6. Dispositif d'entraînement selon la revendication 5,
**caractérisé en ce que**
la palier à tourillon comporte un palier à bille (34).
